(19) Europäisches Patentamt
European Patent Office
Office européen des brevets

(11) EP 2 124 286 A1

(12) **EUROPEAN PATENT APPLICATION**

(43) Date of publication:
**25.11.2009 Bulletin 2009/48**

(51) Int Cl.:
***H01M 10/40*** *(2006.01)* ***H01M 10/42*** *(2006.01)*

(21) Application number: **09160831.5**

(22) Date of filing: **20.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **21.05.2008 KR 20080047026**

(71) Applicant: **Samsung SDI Co., Ltd.**
**Gyeonggi-do (KR)**

(72) Inventors:
- **Kim, Jinsung**
  **Gyeonggi-do (KR)**
- **Park, Narae**
  **Gyeonggi-do (KR)**
- **Lim, Jinhyunk**
  **Gyeonggi-do (KR)**
- **Han, Suhee**
  **Gyeonggi-do (KR)**
- **Kim, Jinbum**
  **Gyeonggi-do (KR)**
- **Oh, JungKang**
  **Gyeonggi-do (KR)**

(74) Representative: **Killin, Stephen James et al**
**Venner Shipley LLP**
**20 Little Britain**
**London EC1A 7DH (GB)**

# (54) Electrolyte and lithium ion secondary battery comprising the same

(57) An electrolyte for a Lithium ion secondary battery which includes: a non-aqueous organic solvent; a lithium salt; and a phosphonitrile fluoride trimer as an additive, and a lithium ion secondary battery comprising the same. The thickness increase rate of the battery is reduced even when it is kept at a high temperature. Thus, thermal stability and durability are prominently improved. The battery can more improve durability by further comprising vinylene carbonate or ethylene carbonate group compound in the electrolyte.

FIG. 1

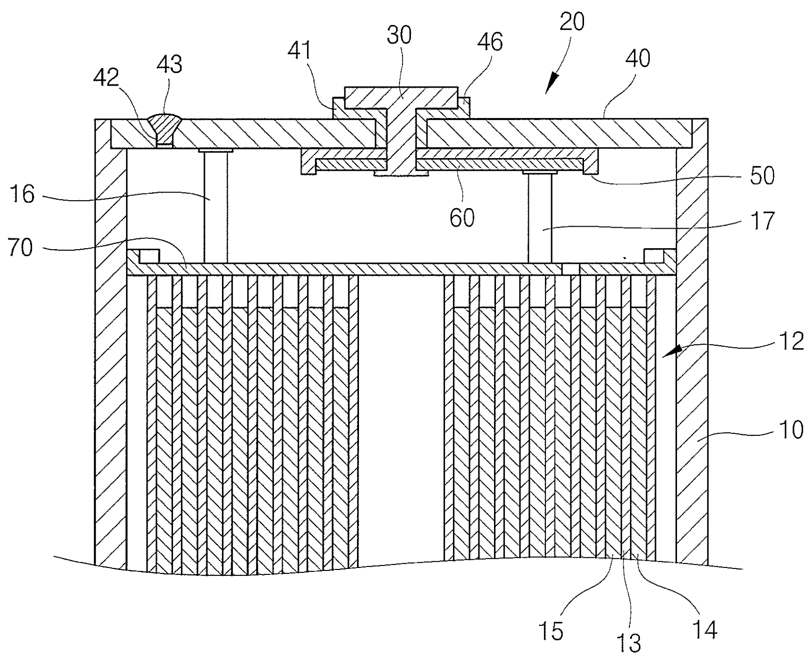


EP 2 124 286 A1

## Description

The present invention relates to an electrolyte for a lithium ion secondary battery and a lithium ion secondary battery comprising the same, and more particularly, to an electrolyte for a lithium ion secondary battery that can prevent thickness increase of the battery by containing piperazine derivative, that is, phosphonitrile fluoride trimer and thus improve thermal stability and durability of the battery even when it is placed at a high temperature, and a lithium ion secondary battery comprising the same.

A battery is a device that converts chemical energy of chemical materials inside into electrical energy through electrochemical oxidation/reduction reaction. Recently, portable IT devices such as a camcorder, a cellular phone, a notebook computer, a PC and a PDA have been actively developed with rapid progress of electronic, telecommunication and computer industries. Accordingly, there has been increased demand for a slim secondary battery of high performance, durability and reliability that can be used in the above portable devices.

The lithium metal has low weight and standard electrode potential. Accordingly, the lithium may have very high operation voltage and energy density when it is used as an anode of the battery. However, the lithium metal causes a serious problem in stability of the battery. In other words, it is grown like resin through reaction with an organic solvent to cause an electric short in the battery. Thus, carbon has been developed as an anode material that can substitute the lithium metal. The carbon is capable of reversible intercalation and deintercalation of lithium ions because it has an electrode potential most similar to the lithium metal and a layered structure. Such a battery is called as a lithium ion battery. The lithium ion battery has been widely used as a secondary battery because it has a high discharge voltage near 4V, excellent energy density per weight and low self-discharge rate.

During initial charging of the lithium battery, lithium ions released from lithium metal composite oxide used as a cathode move to a graphite electrode used as an anode and are inserted into layers of the graphite electrode. In this time, the lithium ions form a kind of a passivation layer on the surface of the graphite anode. The passivation layer is called as a SEI (solid electrolyte interface) film. When the SEI film is formed once, it functions as an ion tunnel to allow only lithium ions to pass through. By effect of the ion tunnel, molecules of organic solvent having a large molecular weight, which move with the lithium ions in the electrolyte, for example, EC, DMC or DEC are inserted into the graphite anode to prevent degradation of the graphite anode structure. When the SEI film is formed once, the lithium ions do not react with the graphite anode or other material again. The amount of the lithium ions in the electrolyte is kept reversible and thus stable charge/discharge is maintained. However, in an angular thin film battery, gases such as CO, $CO_2$ $CH_4$, $C_2H_6$ are generated by decomposition of carbonate group organic solvent during the above SEI formation reaction to cause a problem that the thickness of battery is expanded during charge. In addition, when the fully charged battery is stored at a high temperature, the SEI film is slowly degraded with the lapse of time. Accordingly, sub-reaction, that is, reaction between exposed anode surface and the electrolyte around it is continuously generated. In this time, internal pressure of the battery is increased by continuous generation of gas. As a result, in the case of the angular battery, the thickness of the battery is increased. Accordingly, there has been increased demand for electrolyte that has excellent thermal property without expansion of the volume when it is stored at a high temperature.

In addition, most of non-aqueous electrolytic solvents usually have a low withstand voltage. When electrolytes using the solvents of the low withstand voltage are used in the secondary battery, the solvent is decomposed with repetition of charge/discharge and thus gas is generated to cause the increase of the internal pressure of the battery. As a result, charge/discharge efficiency of the battery is decreased and a lifetime of the battery is shortened by reduction of the energy density of the battery.

To solve above problems, there have been proposed batteries that improve the thermal property by adding a small amount of compound as an additive in the electrolyte of the lithium secondary battery (See Japanese Patent publications Nos. 1996-22839 and No. 1990-10666).

According to a first aspect of the present invention, there is provided an electrolyte for a lithium ion secondary battery, which includes: a non-aqueous organic solvent; a lithium salt; and a phosphonitrile fluoride trimer represented by a chemical formula 1 below as an additive:

[Chemical formula 1]

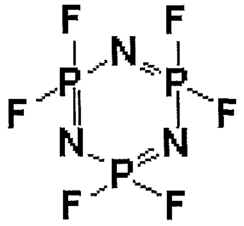

The content of the phosphonitrile fluoride trimer of the chemical formula 1 may be 0.1 to 5 parts by weight to 100 parts by weight of the total electrolyte.

The electrolyte for the lithium ion secondary battery may further include any one selected from the group consisting of vinylene carbonate (VC), propene sultone, ethylene carbonate group compound represented by a chemical formula 2, and mixtures thereof:

[Chemical formula 2]

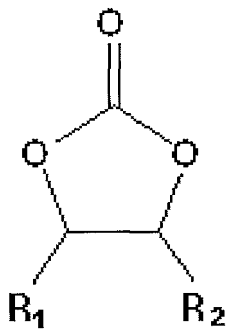

(where $R_1$ and $R_2$ are respectively selected from the group consisting of hydrogen, halogen group, cyano group (CN), nitro group ($NO_2$), vinyl group and fluorinated alkyl group having 1 to 5 carbons, where any one of $R_1$ and $R_2$ is not hydrogen.)

Fluoroethylene carbonate may be used as the ethylene carbonate group compound.

The non-aqueous organic solvent may be any one selected from the group consisting of carbonates, esters, ethers, ketones, and mixtures thereof.

The carbonate may be any one selected from the group consisting of dimethyl carbonate, diethyl carbonate, dipropyl carbonate, methylpropyl carbonate, ethylpropyl carbonate, ethylmethyl carbonate, ethylene carbonate, propylene carbonate, butylene carbonate, pentylene carbonate and mixtures thereof.

The ester may be any one selected from the group consisting of methyl acetate, ethyl acetate, propyl acetate, butyl acetate, methyl propionate, ethyl propionate, 'ϒ"-butyrolactone, decanolide, valerolactone, mevalonolactone, caprolactone and mixtures thereof.

The ether may be any one selected from the group consisting of dibutyl ether, tetraglyme, diglyme, dimethoxy ethane, 2-methyltetrahydrofuran, tetrahydrofuran and mixtures thereof.

The ketone may be any one selected from the group consisting of polymethylvinyl ketone, cyclohexanone and mixtures thereof.

The lithium salt may be any one selected from the group consisting of $LiPF_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$ (where p and q are natural numbers), LiCl, LiI and mixtures thereof.

According to a second aspect of the present invention, there is provided a lithium ion secondary battery, which

comprises: a cathode including a cathode active material that can reversibly intercalate and deintercalate lithium ions; an anode including an anode active material that can reversibly intercalate and deintercalate lithium ions; and the above electrolyte according to the first aspect of the present invention.

According to a third aspect of the present invention, there is provided the use of an electrolyte according to the first aspect of the present invention for a battery. In an embodiment the battery is a secondary battery, such as a lithium ion secondary battery.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIGURE 1 is a view illustrating a rectangular type lithium ion secondary battery according to one exemplary embodiment of the present invention;

FIGURE 2 is a graph illustrating discharge capacity relative to the number of charge/discharge cycle according to the embodiments of the present invention and comparison examples; and

FIGURE 3 is a graph illustrating capacity retention ratio relative to the number of charge/discharge cycle according to the embodiments of the present invention and comparison examples.

An electrolyte according to the present invention includes a phosphonitrile fluoride trimer represented by a chemical formula 1 below as an additive:

[Chemical formula 1]

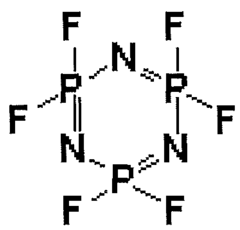

The phosphonitrile fluoride trimer prevents loss of lithium caused by reaction between lithium and electrolyte by forming a film having high thermal stability on an anode during charge. In addition, the phosphonitrile fluoride trimer prevents degradation of cycle characteristic of the battery and to improve thermal stability by inhibiting decomposition of the electrolyte.

The content of the additive is 0.1 to 5 parts by weight to 100 parts by weight of the total electrolyte. When the content of the additive is less than the above range, improvement of the thermal stability and durability is insufficient. On the other hand, when the content of the additive is more than the above range, viscosity of the electrolyte is increased to reduce movement of lithium ions.

The non-aqueous electrolyte may further include any one selected from the group consisting of vinylene carbonate, propene sultone, ethylene carbonate group compound represented by a chemical formula 2, and mixtures thereof:

[Chemical formula 2]

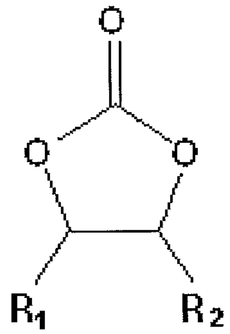

(In the above chemical formula, $R_1$ and $R_2$ are respectively selected from the group consisting of hydrogen, halogen group, cyano group (CN), nitro group ($NO_2$), vinyl group and fluorinated alkyl group having 1 to 5 carbons, where any one of $R_1$ and $R_2$ is not hydrogen.)

The ethylene carbonate group compound may typically include difluoroethylene carbonate, chloroethylene carbonate, dichloroethylene carbonate, bromoethylene carbonate, dibromoethylene carbonate, nitroethylene carbonate, cyanoethylene carbonate or fluoroethylene carbonate. Fluoroethylene carbonate is desirable. When the additive is used to improve a lifetime, the amount may be properly controlled.

The electrolyte also includes non-aqueous organic solvent and lithium salts.

The non-aqueous organic solvent functions as a medium that transfers lithium ions participated in the electrochemical reaction of the battery.

The non-aqueous organic solvent may be any one selected from the group consisting of carbonates, esters, ethers, ketones and mixture thereof.

The carbonate group solvent may be any one of dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC) and butylene carbonate(BC).

The ester group solvent may be any one of n-methyl acetate, n-ethyl acetate, n-propyl acetate, dimethyl acetate, methyl propionate, ethyl propionate, 'ϒ'-butyrolactone, decanolide, valerolactone, mevalonolactone and caprolactone.

The ether may be any one of dibutyl ether, tetraglyme, diglyme, dimethoxyethane, 2-methyltetrahydrofuran and tetrahydrofuran.

The ketone may be any one of cyclohexanone and polymethylvinyl ketone.

The non-aqueous organic solvent may be used as alone or mixture of at least one.

When mixture of at least one organic solvent is used, the mixing ratio may be properly controlled to according to desired battery performance. The organic solvent having a high dielectric constant and a low viscosity should be used to transfer ions smoothly by improving dissociation of ions. Generally, it is desirable to use a mixture of at least two solvents including a solvent having high dielectric constant and viscosity and a solvent having low dielectric constant and viscosity. It is desirable to use a mixture of a cyclic type carbonate and a chain type carbonate as the carbonate group solvent. In this time, it is desirable that the mixing ratio of the cyclic type carbonate to the chain type carbonate is 1: 1 to 1: 9 in volume ratio to improve performance of the electrolyte.

The non-aqueous organic solvent may further include an organic solvent of aromatic hydrocarbon group in addition to the carbonate group organic solvent. The aromatic hydrocarbon compound having the following chemical formula 3 may be used as the aromatic hydrocarbon group organic solvent.

[Chemical formula 3]

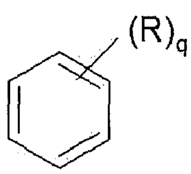

(In the above chemical formula, R is halogen or alkyl group having 1 to 10 carbons and q is an integer of 0 to 6).

The aromatic hydrocarbon group organic solvent may be any one of benzene, fluorobenzene, bromobenzene, chlorobenzene, toluene, xylene, and mesitylene or mixtures thereof. When the volume ratio of the carbonate solvent to the aromatic hydrocarbon group organic solvent is 1:1 to 30:1 in the electrolyte containing the aromatic hydrocarbon group organic solvent, generally required properties of the electrolyte such as stability, safety and ion conductivity are more excellent than other compositions having different volume ratios.

The lithium salt functions as a source of lithium ions and enables basic operations of the lithium ion secondary battery and promotes movement of lithium ions between the cathode and anode. The lithium salt may be any one selected from the group consisting of $LiPF_6$, $LiBF_4$, $LiSbF_6$, $LiAsF_6$, $LiClO_4$ $LiCF_3SO_3$, $LiC_4F_9SO_3$, $LiAlO_4$, $LiAlCl_4$, $LiN(C_pF_{2p+1}SO_2)(C_qF_{2q+1}SO_2)$ (p and q are natural numbers), LiCl, LiI and mixtures thereof. It is desirable to use the lithium salt that has low lattice energy, high dissociation degree, excellent ion conductivity, thermal stability and oxidation resistance. In addition, it is desirable that a concentration of the lithium salt is 0.1 to 2.0M. When the concentration of the lithium salt is less than 0.1M, the conductivity of the electrolyte is decreased and thus performance thereof is degraded. On the other hand, when the concentration of the lithium salt is more than 2.0M, the viscosity of the electrolyte is increased and thus movement of the lithium ions is reduced.

The lithium ion secondary battery comprising the electrolyte includes a cathode, an anode and a separator.

The cathode includes a cathode active material that can reversibly intercalate and deintercalate lithium ions. It is desirable that the cathode active material is composite metal oxide of lithium and at least one metal selected from cobalt, manganese and nickel.

The solid solubility of metals may be variously used in the composite metal oxide. In addition to the metals, any one selected from the group consisting of Mg, Al, Co, K, Na, Ca, Si, Ti, Sn, V, Ge, Ga, B, As, Zr, Mn, Cr, Fe, Sr, V and rare earth elements may be further included.

The anode includes an anode active material that can reversibly intercalate and deintercalate lithium ions. Crystalline or amorphous carbon, carbonic anode active material (thermally decomposed carbon, coke, graphite) such as carbon composite, combusted organic polymer, carbon fiber, tin oxide, lithium metal or alloy of lithium and other element may be used as the anode active material. For example, the amorphous carbon includes hard carbon, cokes, mesocarbon microbead (MCMB) calcinated below 1500°C, mesophase pitch-based carbon fiber (MPCF), etc. The crystalline carbon includes graphite materials, more particularly, natural graphite, graphitized cokes, graphitized MCMB, and graphitized MPCF, etc.

The anode and cathode may be made by preparing electrode slurry composition by dispersing the electrode active material, a binder, a conductive material and a thickener, if necessary, in a solvent and coating the slurry composition on an electrode collector. Aluminum or aluminum alloy may be usually used as a cathode collector and copper or copper alloy may be usually used as an anode collector. The anode and cathode collectors may be formed in a type of foil or mesh.

The lithium secondary battery includes a separator preventing a short between the cathode and anode. Polymer membrane such as polyolefin, polypropylene, polyethylene, multi-membrane thereof, micro-porous film, woven or non-woven fabric may be used as the separator.

A unit battery having a structure of cathode/separator/anode, a bi-cell having a structure of cathode/separator/anode/separator/cathode, or a battery stack including a plurality of unit batteries may be formed by the above lithium secondary battery including the electrolyte, cathode, anode and separator.

A typical lithium secondary battery having the above construction is shown in FIGURE 1.

Referring to FIGURE 1, the lithium secondary battery is formed of an electrode assembly 12 including a cathode 13, an anode 15 and a separator 14, a can 10 receiving the electrode assembly and electrolyte, and a cap assembly 20 sealing an upper part of the can 10. The cap assembly 20 includes a cap plate 40, an insulation plate 50, a terminal plate 60 and an electrode terminal 30. The cap assembly 20 is combined with an insulation case 70 to seal the can 10.

The electrode terminal 30 is inserted into a terminal hole 41 formed at the middle of the cap plate 40. When the electrode terminal 30 is inserted into the terminal hole 41, a tubular gasket 46 combined with an outer surface of the electrode terminal 30 is inserted into the terminal hole 41 together to insulate the electrode terminal 30 from the cap plate 40. After the cap assembly 20 is assembled to the upper part of the can 10, the electrolyte is injected through an electrolyte injection hole 42 and then the electrolyte injection hole 42 is sealed by a stopper 43. The electrode terminal 30 is connected to an anode tab 17 of the anode or a cathode tab 16 of the cathode to function as an anode terminal or a cathode terminal.

The lithium secondary battery may be formed in various types such as cylindrical and pouch types in addition to the rectangular type.

Embodiments of the present invention and comparison examples will be explained below, but not limited thereto.

Example 1

Cathode active material slurry was prepared by dispersing $LiCoO_2$ as a cathode active material, polyvinylidene fluoride (PVdF) as a binder, and carbon as a conductive material in N-methyl-2-pyrrolidone (NMP) solvent by a weight ratio of 92: 4: 4. Then a cathode was made by coating the cathode active material slurry on an aluminum foil having a thickness of 15μm, drying and rolling it. The anode active material slurry was prepared by mixing artificial graphite as an anode active material, styrene-butadiene rubber as a binder, and carboxymethylcelluose as a thickener by a weight ratio of 96: 2: 2, then dispersing it in the water. Then an anode was made by coating the slurry on a copper foil having a thickness of 10μm, drying and rolling it. Next, after a polyethylene separator having a thickness of 10μm is interposed between the above electrodes, it was wound, and pressurized. Then, it is inserted into a rectangular can having a size of 46mm*34mm*50mm. Then, electrolyte was injected into the can, thereby completing a lithium secondary battery.

The electrolyte was prepared by adding $LiPF_6$ in a mixture solvent of ethylene carbonate, ethylmethyl carbonate and diethyl carbonate (volume ratio is 1:1:1) and adding phosphonitrile fluoride trimer, where the concentration of LiPF6 was 1.0M and the added amount of the phosphonitrile fluoride trimer was 1 part by weight to 100 parts by weight of the total electrolyte.

Example 2

This example was carried out in the same manner as Example 1 except that the phosphonitrile fluoride trimer of 2 parts by weight was added.

Example 3

This example was carried out in the same manner as Example 1 except that the phosphonitrile fluoride trimer of 3 parts by weight was added.

Example 4

This example was carried out in the same manner as Example 1 except that the phosphonitrile fluoride trimer of 2 parts by weight was added and fluoroethylene carbonate (FEC) of 2 parts by weight was added.

Comparative Example

The comparative example was carried out in the same manner as Example 1 except that the phosphonitrile fluoride trimer was not added.

Capacity and capacity retention ratio according to repetition of charge/discharge were measured for the batteries manufactured in the examples and comparative example and thickness increase rate was measured after the batteries had been left for 7 days at 60°C. Thus, effect of the phosphonitrile fluoride trimer on the lifetime and thermal stability of the battery was confirmed.

Experimental example 1: lifetime test

The batteries manufactured in Examples 1 to 4 and Comparative Example 1 were charged with constant current and constant voltage of 1C/4.2V for 3 hours at a room temperature and then discharged with a constant current of 1C/3.0V. The charge/discharge was performed by 100, 200 and 300 cycles respectively. Then, discharge capacities were measured and shown in FIGURE 2. The capacity retention ratios (%) corresponding to the cycles were calculated as below and shown in FIGURE 3 and Table 1.

Capacity retention ratio (%) of the corresponding cycle = (discharging capacity of the corresponding cycle/discharging capacity of the first cycle)*100 (%)

Experimental example 2: thermal stability test

The batteries manufactured in Examples 1 to 4 and Comparative Example 1 were left for 7 days at 60°C. Then, thickness increase rates were measured and the results were shown in Table 1.

A : initial thickness

B : thickness after the battery was left for 7 days at 60°C thickness increase rate

$$(\%) = (B\text{-}A)/A$$

[Table 1]

| | phosphonitrile fluoride trimer (parts by weight) | Fluoroethylene carbonate (parts by weight) | Capacity retention ratio (%) after 300 charge/discharge cycles | thickness increase rate (%) after the battery was left for days at 60°C |
|---|---|---|---|---|
| Example 1 | 1 | - | 84 | 9.5 |
| Example 2 | 2 | - | 88 | 8.1 |
| Example 3 | 3 | - | 89 | 6.2 |
| Example 4 | 2 | 2 | 90 | 8.3 |
| Comparative Example 1 | - | - | 7 | 17.0 |

As shown in Table 1, FIGURES 2 and 3, when the phosphonitrile fluoride trimer of 0.1 to 5wt% was added, the discharge capacity and capacity retention ratio after 300 charge/discharge cycles, that is, lifetimes were more improved comparing with the comparative example 1. In addition, when the ethylene carbonate group additive such as FEC was added with the phosphonitrile fluoride trimer, the lifetime was more improved.

Referring to Table 1, in the cases of Examples 1 to 4, thickness increase rate (%) after the battery was left for 7 days at 60°C was lower than the Comparative Example. Thus, the thermal stability was also improved.

As described above, the lithium secondary battery comprising the electrolyte according to the present invention produces the following effect.

The thickness increase rate of the battery is reduced even when it is kept at a high temperature. Thus, thermal stability and durability are prominently improved.

While this invention has been described in connection with the aforementioned exemplary embodiments, it is to be understood that the invention is not limited to the disclosed embodiments, but, on the contrary, is intended to cover various modifications and equivalent arrangements included within the scope of the appended claims.

## Claims

**1.** An electrolyte for a lithium ion secondary battery comprising:

a non-aqueous organic solvent;
a lithium salt; and
a phosphonitrile fluoride trimer represented by the chemical formula 1 as an additive:

[Chemical formula 1]

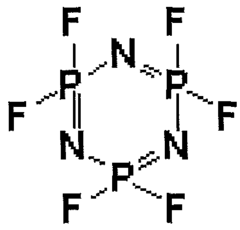

2. The electrolyte of claim 1, wherein the content of the phosphonitrile fluoride trimer of the chemical formula 1 is 0.1 to 5 parts by weight to 100 parts by weight of the total electrolyte.

3. The electrolyte of claims 1 or 2, further comprising any one selected from the group consisting of vinylene carbonate, propene sultone, ethylene carbonate group compound represented by a chemical formula 2, and mixtures thereof:

[Chemical formula 2]

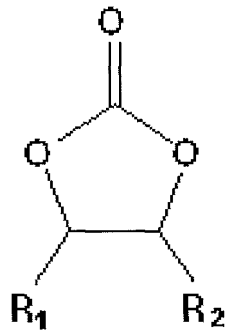

where $R_1$ and $R_2$ are respectively selected from the group consisting of hydrogen, halogen group, cyano group (CN), nitro group ($NO_2$), vinyl group and fluorinated alkyl group having 1 to 5 carbons, where any one of $R_1$ and $R_2$ is not hydrogen.

4. The electrolyte of claim 3, wherein the ethylene carbonate group compound is fluoroethylene carbonate.

5. The electrolyte of any one of claims 1 to 4, wherein the non-aqueous organic solvent is any one selected from the group consisting of carbonates, esters, ethers, ketones and mixtures thereof.

6. The electrolyte of claim 5, wherein the carbonate is any one selected from the group consisting of dimethyl carbonate, diethyl carbonate, dipropyl carbonate, methylpropyl carbonate, ethylpropyl carbonate, ethylmethyl carbonate, ethylene carbonate, propylene carbonate, butylene carbonate, pentylene carbonate and mixtures thereof.

7. The electrolyte of claim 5, wherein the ester is any one selected from the group consisting of n-methyl acetate, n-ethyl acetate, n-propyl acetate, butyl acetate, methyl propionate, ethyl propionate, 'ϒ-butyrolactone, decanolide, valerolactone, mevalonolactone, caprolactone and mixtures thereof.

8. The electrolyte of claim 5, wherein the ether is any one selected from the group consisting of dibutyl ether, tetraglyme, diglyme, dimethoxy ethane, 2-methyltetrahydrofuran, tetrahydrofuran and mixtures thereof.

**9.** The electrolyte of claim 5, wherein the ketone is any one selected from the group consisting of polymethylvinyl ketone, cyclohexanone and mixtures thereof.

**10.** The electrolyte of any one of the preceding claims, wherein the lithium salt is any one selected from the group consisting of $LiPF_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$ (where p and q are natural numbers), LiCl, LiI and mixtures thereof.

**11.** A lithium ion secondary battery, comprising:

a cathode including a cathode active material that can reversibly intercalate and deintercalate lithium;
an anode including an anode active material that can reversibly intercalate and deintercalate lithium; and
the electrolyte of any one of claims 1 to 10.

**12.** Use of an electrolyte as claimed in any one of claims 1 to 10 for a battery.

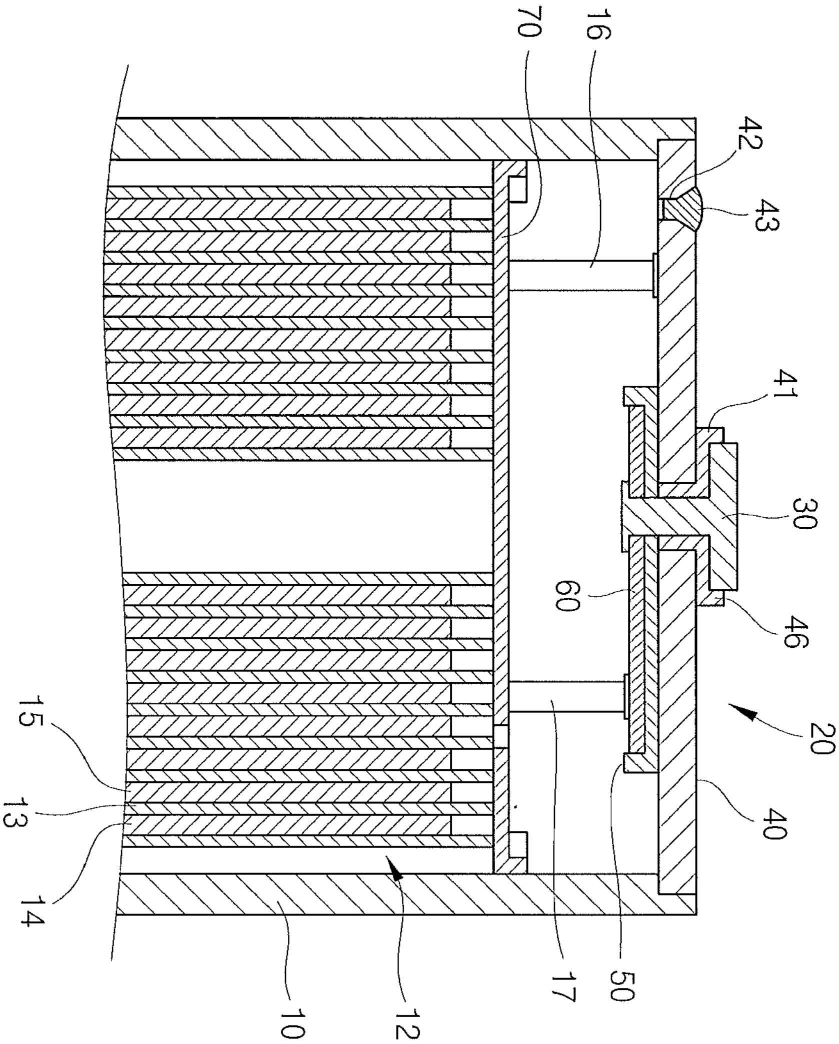


FIG. 1

FIG. 2

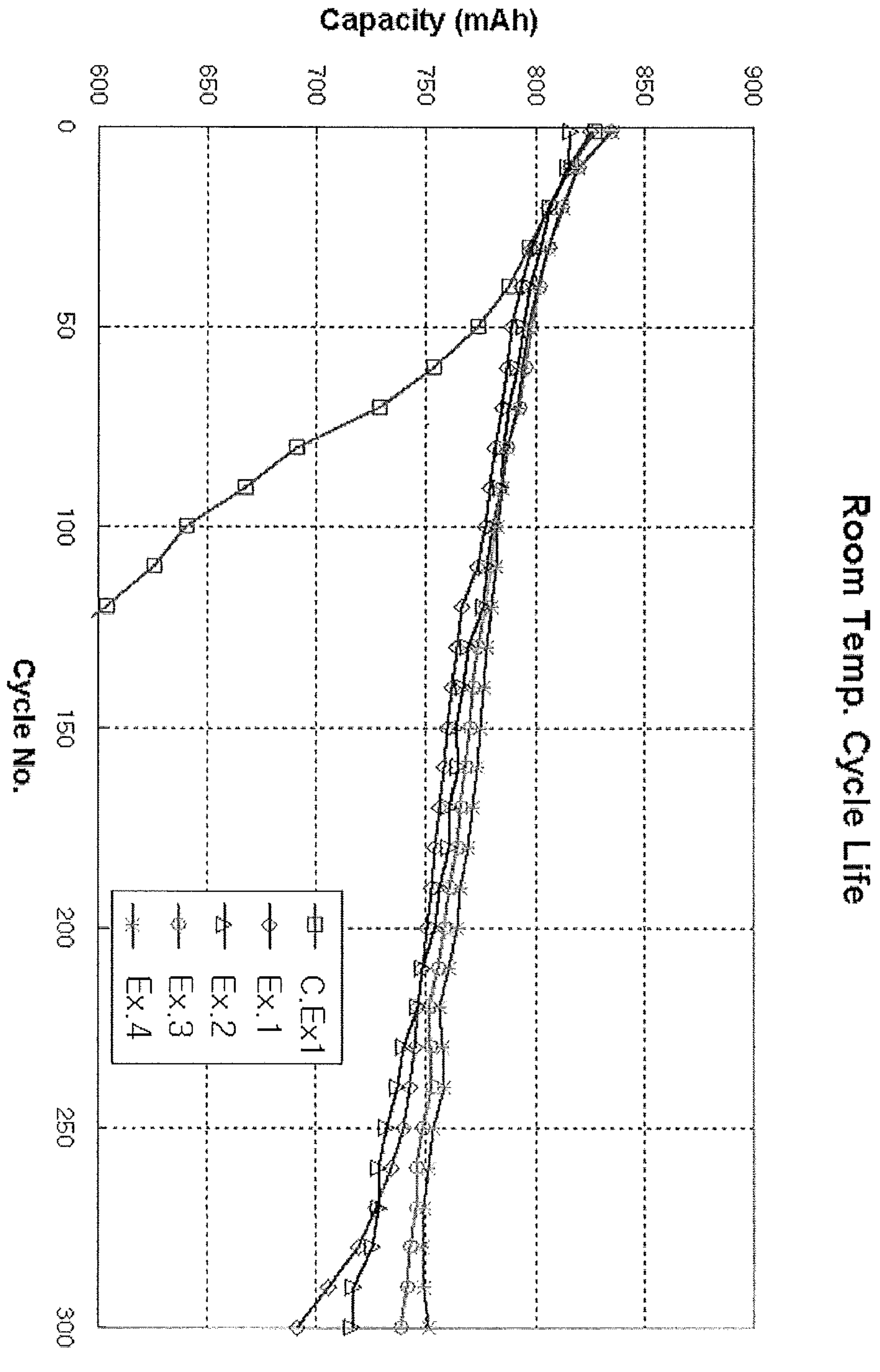
Room Temp. Cycle Life
Capacity (mAh)
600
650
700
750
800
850
900
Cycle No.
0
50
100
150
200
250
300
C.Ex1
Ex.1
Ex.2
Ex.3
Ex.4

FIG. 3

Room Temp. Cycle Life

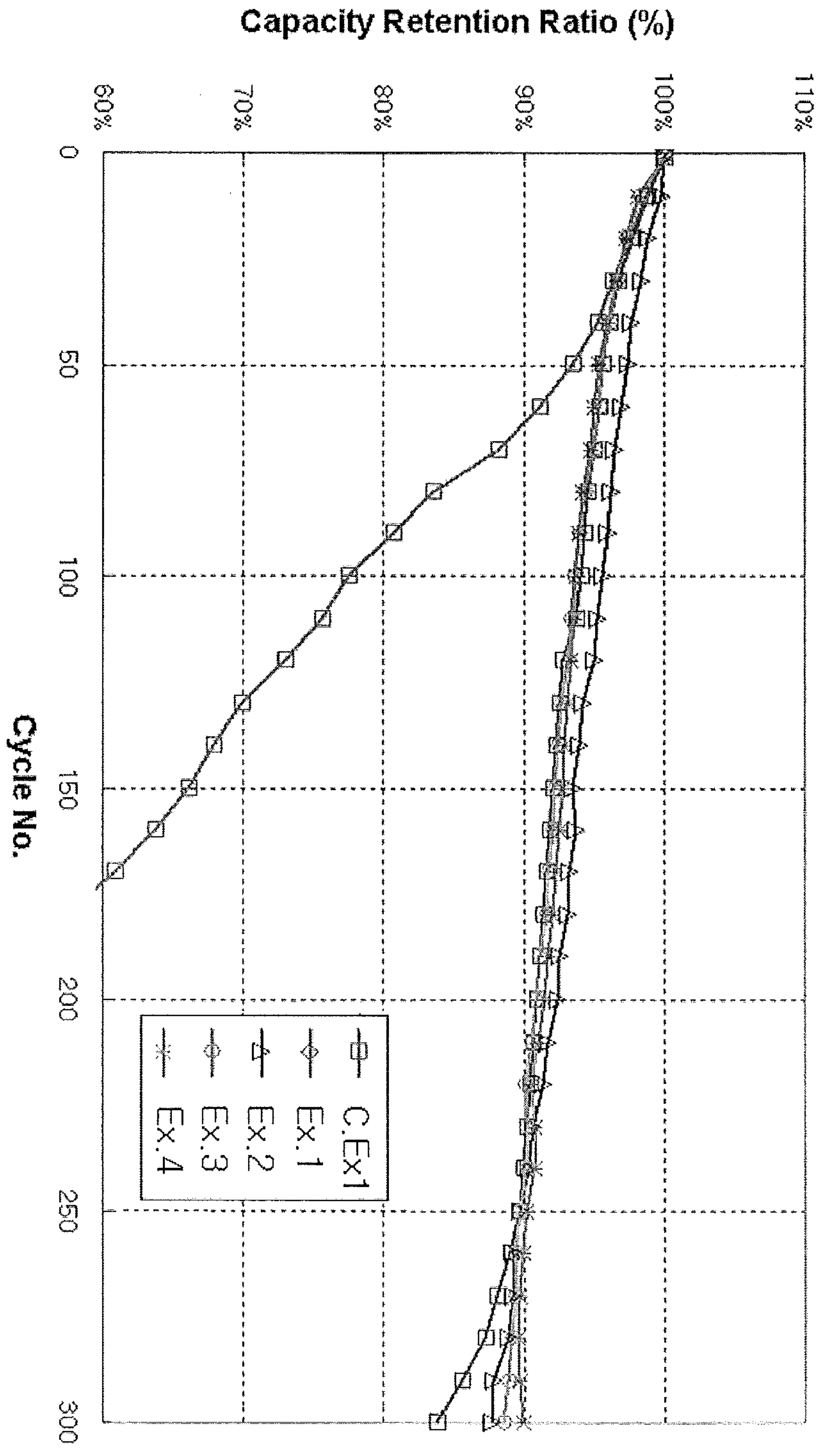

Europäisches Patentamt
European Patent Office
Office européen des brevets

# EUROPEAN SEARCH REPORT

Application Number
EP 09 16 0831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | JP 2006 024380 A (MITSUBISHI CHEM CORP) 26 January 2006 (2006-01-26)<br>* paragraphs [0016] - [0018], [0020] *<br>* paragraphs [0022] - [0067] *<br>----- | 1-8, 10-12<br><br><br>9 | INV.<br>H01M10/40<br>H01M10/42 |
| X<br><br>Y | US 2007/072084 A1 (NISHIE KATSUSHI [JP]) 29 March 2007 (2007-03-29)<br>* paragraphs [0001] - [0044], [0051], [0078], [0084]; table 3 *<br>----- | 1-3,5-8, 10-12<br>3,4,9 | |
| X | EP 1 329 975 A (BRIDGESTONE CORP [JP]) 23 July 2003 (2003-07-23)<br>* paragraphs [0001] - [0004], [0015], [0017] - [0019], [0025] - [0029] *<br>* paragraphs [0035] - [0038], [0045] - [0084], [0139], [0149] *<br>----- | 1,2,5-8, 10-12 | |
| X | US 2008/020285 A1 (HORIKAWA YASUO [JP]) 24 January 2008 (2008-01-24)<br>* paragraphs [0007] - [0012], [0014], [0034] - [0044], [0059] *<br>----- | 1,3,5-8, 10-12 | TECHNICAL FIELDS SEARCHED (IPC) |
| Y | US 2008/090153 A1 (KIM YONGSHIK [KR] ET AL) 17 April 2008 (2008-04-17)<br>* paragraphs [0015], [0030] - [0054] *<br>----- | 3,4,9 | H01M |
| Y | JP 2007 207439 A (SONY CORP) 16 August 2007 (2007-08-16)<br>* paragraphs [0061] - [0065], [0073], [0110] - [0112]; table 6 *<br>----- | 3,4 | |
| Y | US 2003/118914 A1 (MORI SUMIO [JP]) 26 June 2003 (2003-06-26)<br>* paragraphs [0013] - [0039] *<br>----- | 3 | |

The present search report has been drawn up for all claims

3

| Place of search | Date of completion of the search | Examiner |
|---|---|---|
| The Hague | 26 August 2009 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 16 0831

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2009

| Patent document cited in search report | Publication date | Patent family member(s) | Publication date |
|---|---|---|---|
| JP 2006024380 A | 26-01-2006 | NONE | |
| US 2007072084 A1 | 29-03-2007 | CN 1871740 A | 29-11-2006 |
| | | WO 2005036690 A1 | 21-04-2005 |
| EP 1329975 A | 23-07-2003 | AU 8443201 A | 22-03-2002 |
| | | CA 2422109 A1 | 07-03-2003 |
| | | CN 1452796 A | 29-10-2003 |
| | | WO 0221631 A1 | 14-03-2002 |
| | | US 2003175598 A1 | 18-09-2003 |
| US 2008020285 A1 | 24-01-2008 | JP 2008053211 A | 06-03-2008 |
| US 2008090153 A1 | 17-04-2008 | CN 101165961 A | 23-04-2008 |
| | | EP 1923948 A1 | 21-05-2008 |
| | | JP 2008103330 A | 01-05-2008 |
| | | KR 100760763 B1 | 04-10-2007 |
| JP 2007207439 A | 16-08-2007 | CN 101013750 A | 08-08-2007 |
| | | KR 20070078805 A | 02-08-2007 |
| | | US 2008280201 A1 | 13-11-2008 |
| US 2003118914 A1 | 26-06-2003 | CN 1417881 A | 14-05-2003 |
| | | JP 3797197 B2 | 12-07-2006 |
| | | JP 2003142152 A | 16-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8022839 A
- JP 2010666 A